# EUROPÄISCHE PATENTANMELDUNG

(11) **EP 0 827 259 A1**
(43) Veröffentlichungstag der Anmeldung: **04.03.1998**
(21) Anmeldenummer: 97113391.3
(22) Anmeldetag: 04.08.1997
(51) Int. Cl.: H02K 5/22, H01R 23/10

(54) **Elektrische Steckverbindung**

(30) Priorität: 30.08.1996 DE 29615095 U
(71) Anmelder: Harting KGaA, 32325 Espelkamp (DE)
(72) Erfinder: Harting, Dietmar, Dipl.-Kaufm., 32339 Espelkamp (DE); Junck, Herbert, Dipl.-Ing., 32312 Lübbecke (DE); Herbrechtsmeier, Heiko, Dipl.-Ing., 32257 Bünde (DE); Möller, Harald, Dipl.-Ing., 32312 Lübbecke (DE); Schmidt, Martin, Dipl.-Ing., 32312 Lübbecke (DE)

(57) **Zusammenfassung**

Für eine elektrische Steckverbindung für den Anschluß elektrischer Leitungen an einen Motor, bestehend aus einer ersten, in einem Flansch- bzw. Anbaugehäuse angeordneten Steckverbindungshälfte, das an den Motor angebaut ist und einer zweiten Steckverbindungshälfte, die mit der ersten Steckverbindungshälfte steckbar ist, wird vorgeschlagen, die erste Steckverbindungshälfte mit einem Kontaktstiftträger zu versehen, dessen Kontaktstifte mit den Anschlußleitungen des Motors verbunden sind, und die zweite Steckverbindungshälfte mit einem Buchsenträger auszustatten, an dessen Kontaktbuchsen die Leitungen eines Anschlußkabels anschließbar sind.

## Beschreibung

Die Erfindung betrifft eine elektrische Steckverbindung für den Anschluß elektrischer Leitungen an einen Motor, bestehend aus einer ersten, in einem Flansch- bzw. Anbaugehäuse angeordneten Steckverbindungshälfte, das an den Motor angebaut ist und einer zweiten Steckverbindungshälfte, die mit der ersten Steckverbindungshälfte steckbar ist.

Derartige Steckverbindungen werden zum Anschluß der Versorgungsspannung an Motoren verwendet.

Es ist bekannt, die Motoren mit einem Klemmenkasten zu versehen, in dem die Anschlußleitungen der Motorwicklungen an Klemmen enden und wobei ein äußeres Anschlußkabel in den Klemmenkasten geführt ist. Die Auswahl der Motorschaltung, wie z.B. Stern- oder Dreieckschaltung, wird durch entsprechenden Anschluß des Kabels an die Klemmen im Klemmenkasten getroffen. Dabei werden ggf. Brücken zwischen einzelnen Klemmen vorgesehen, um die jeweils gewünschte Motorschaltung zu erzielen.
Bei Ausfall eines Motors, d.h. wenn dieser ausgetauscht werden muß, ist es erforderlich, im Klemmenkasten des Motors zunächst die entsprechende Motorschaltung durch entsprechende Brücken herzustellen und dann das Anschlußkabel an bestimmte Klemmen anzuschließen. Dabei kann es ggf. zu fehlerhaften Verschaltungen kommen und u.U. sogar zur Zerstörung des Motors.
Es ist daneben auch bekannt, an dem Klemmenkasten eine Steckverbindung für den Anschluß der Versorgungsspannung des Motors vorzusehen. Aber auch hierbei ist bei Austausch eines Motors im Klemmenkasten die jeweils benötigte Motorschaltung herzustellen.

Der Erfindung liegt die Aufgabe zugrunde, eine Steckverbindung der eingangs genannten Art dahingehend auszubilden, daß der Anschluß und ggf. Austausch eines Motors an seine Versorgungsspannung vereinfacht wird und Fehlverschaltungen ausgeschlossen werden.

Diese Aufgabe wird dadurch gelöst, daß die erste Steckverbindungshälfte einen Kontaktstiftträger aufweist, dessen Kontaktstifte mit den Anschlußleitungen des Motors verbunden sind, und daß die zweite Steckverbindungshälfte einen Buchsenträger aufweist, an dessen Kontaktbuchsen die Leitungen eines Anschlußkabels anschließbar sind.

Vorteilhafte Ausgestaltungen der Erfindung sind in den Ansprüchen 2 bis 4 angegeben.

Die mit der Erfindung erzielten Vorteile bestehen insbesondere darin, daß die jeweils erforderliche Motorschaltung bereits im Stecker des Anschlußkabels vorgesehen ist, so daß bei Anschluß und Austausch eines Motors keinerlei Schaltungen / Verdrahtungen erforderlich sind. Es muß lediglich die Steckverbindungshälfte des Anschlußkabels auf die Steckverbindungshälfte am Motor gesteckt werden.

Ein Ausführungsbeispiel der Erfindung ist in der Zeichnung dargestellt und wird im folgenden näher erläutert. Es zeigen
- Fig. 1 - 3: Ansichten eines Motors mit einer Steckverbindung,
- Fig. 4: eine auseinandergezogene Ansicht der Steckverbindung des Motors, und
- Fig. 5: die vergrößerte Ansicht der zweiten Steckverbindungshälfte.

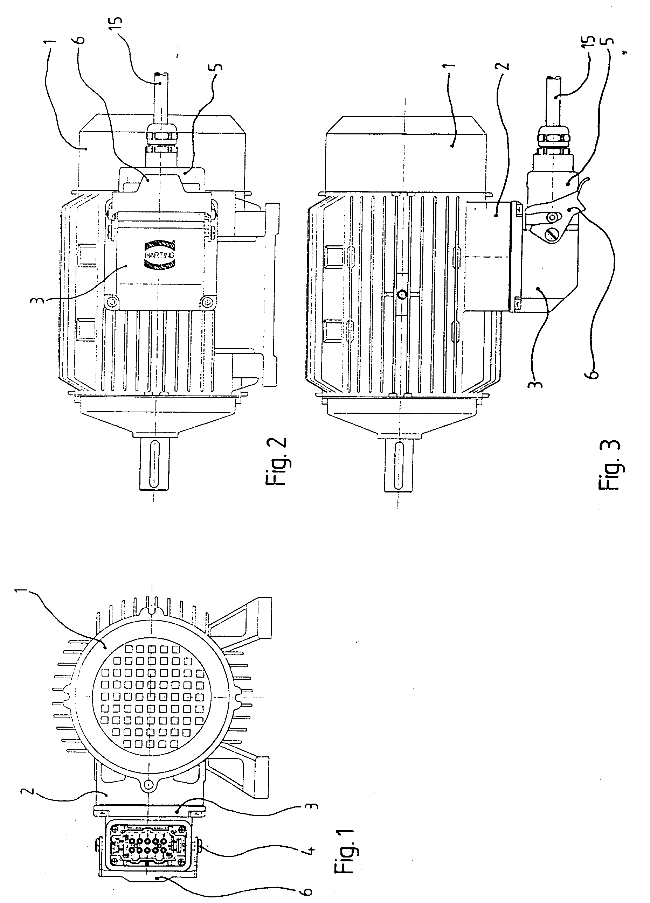

Der in den Fig. 1 - 3 dargestellte Motor 1 ist mit einem Anbauflansch 2 versehen, an dem eine in einem Flanschgehäuse 3 befestigte erste Steckverbindungshälfte 4 angeordnet ist. Eine zweite Steckverbindungshälfte 5 ist damit steckbar und mittels eines Verriegelungsbügels 6 verriegelbar.

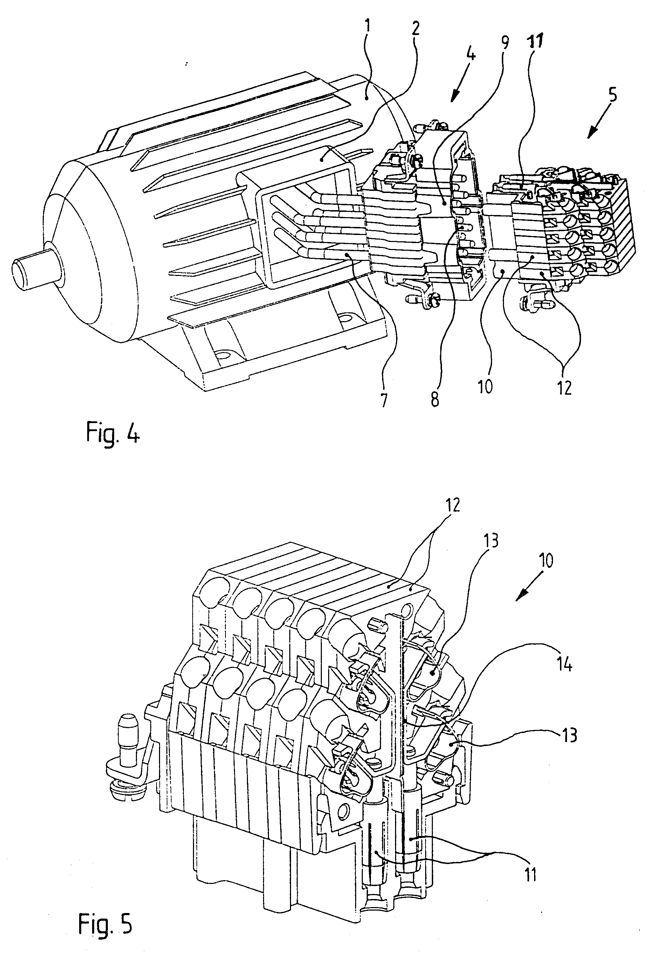

Die Fig. 4 zeigt die wesentlichen Bauelemente der Steckverbindung in auseinandergezogener Ansicht, wobei der Übersichtlichkeit halber die Gehäuse der Steckverbindungshälften nicht dargestellt sind. Die Anschlußleitungen 7 der Motorwicklungen sind jeweils an einem Kontaktelement 8 der ersten Steckverbindungshälfte 4 angeschlossen, wobei die Kontaktelemente in einem Kontaktstiftträger 9 gehalten sind. Die Kontaktelemente dieser Steckverbindungshälfte sind als Stiftkontakte ausgebildet und jede Leitung des Motors ist einem separaten Kontaktelement zugeordnet.

Die zweite Steckverbindungshälfte 5 weist einen Buchsenträger 10 auf, in dem die als Buchsenkontakte ausgebildeten Kontaktelemente 11 in Segmenten 12 gehalten sind. Die Fig. 5 zeigt eine vergrößerte Ansicht des Buchsenträgers. In jedem Segment sind zwei Kontaktelemente, isoliert voneinander, vorgesehen. Jedes Kontaktelement 11 ist weiterhin mit zwei Leiteranschlußvorrichtungen 13 verbunden, wobei diese Verbindung vorzugsweise mittels einer Stromschiene 14 erfolgt. Die Leiteranschlußvorrichtungen sind vorzugsweise als Käfigzugfedern ausgebildet um einen einfachen Anschluß der Leitungen des Anschlußkabels (15) zu ermöglichen.

Bei der vorstehend beschriebenen Ausführung der Steckverbindung kann jetzt die spezielle Verschaltung / Anschlußart des Motors durch entsprechende Brückungen und Anschluß des Anschlußkabels in der mit dem Motor steckbaren zweiten Steckverbindungshälfte vorgesehen werden, ohne daß eine Änderung der Anschlußbelegung der ersten Steckverbindungshälfte am Motor nötig ist.

## Patentansprüche

1. Elektrische Steckverbindung für den Anschluß elektrischer Leitungen an einen Motor, bestehend aus einer ersten, in einem Flansch- bzw. Anbaugehäuse angeordneten Steckverbindungshälfte, das an den Motor angebaut ist und einer zweiten Steckverbindungshälfte, die mit der ersten Steckverbindungshälfte steckbar ist, dadurch gekennzeichnet,
daß die erste Steckverbindungshälfte (4) einen Kontaktstiftträger (9) aufweist, dessen Kontaktstifte (8) mit den Anschlußleitungen (7) des Motors (1) verbunden sind, und
daß die zweite Steckverbindungshälfte (5) einen Buchsenträger (10) aufweist, an dessen Kontaktbuchsen (11) die Leitungen eines Anschlußkabels (15) anschließbar sind.

2. Elektrische Steckverbindung nach Anspruch 1, dadurch gekennzeichnet,
daß die Kontaktbuchsen (11) des Buchsenträgers (10) der zweiten Steckverbindungshälfte (5) mit zweifachen, jeweils miteinander verbundenen Leiteranschlußeinrichtungen (13) versehen sind.

3. Elektrische Steckverbindung nach Anspruch 2, dadurch gekennzeichnet,
daß die Verbindungen der Leiteranschlußeinrichtungen (13) als Stromschienen (14) ausgebildet sind, die mit den Enden der Kontaktbuchsen (11) fest verbunden sind.

4. Elektrische Steckverbindung nach einem der vorstehenden Ansprüche, dadurch gekennzeichnet,
daß die Leiteranschlußeinrichtungen (13) als schraubenlose Klemmen, wie z.B. als sog. Käfigzugfedern ausgebildet sind.
